(19) Europäisches Patentamt
European Patent Office
Office européen des brevets

(11) EP 4 475 261 A1

(12) **EUROPEAN PATENT APPLICATION**
published in accordance with Art. 153(4) EPC

(43) Date of publication:
**11.12.2024 Bulletin 2024/50**

(21) Application number: **23915327.3**

(22) Date of filing: **12.01.2023**

(51) International Patent Classification (IPC):
***H01M 10/0569*** *(2010.01)* ***H01M 10/0567*** *(2010.01)*
***H01M 10/0525*** *(2010.01)*

(52) Cooperative Patent Classification (CPC):
**H01M 10/0525; H01M 10/0567; H01M 10/0569;**
Y02E 60/10

(86) International application number:
**PCT/CN2023/071870**

(87) International publication number:
**WO 2024/148556 (18.07.2024 Gazette 2024/29)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
- **LIU, Jiao**
  **Ningde, Fujian 352100 (CN)**
- **ZHANG, Limei**
  **Ningde, Fujian 352100 (CN)**
- **CHEN, Peipei**
  **Ningde, Fujian 352100 (CN)**
- **REN, Jiamo**
  **Ningde, Fujian 352100 (CN)**

(74) Representative: **Jacob, Reuben Ellis et al**
**Maucher Jenkins**
**Seventh Floor Offices**
**Artillery House**
**11-19 Artillery Row**
**London SW1P 1RT (GB)**

(54) **LITHIUM-ION BATTERY HAVING HIGH ENERGY DENSITY AND FAST CHARGING PERFORMANCE**

(57) This application relates to a lithium-ion battery having a cell group margin A of 88%-97% and including a non-aqueous electrolyte. The non-aqueous electrolyte includes one or more first organic solvents with a specified structure. Based on a total mass of an organic solvent in the non-aqueous electrolyte, a mass percentage of the first organic solvent is X1, X1 being in a range of 20%-80%, and the cell group margin A and the mass percentage X1 of the first organic solvent satisfy a specified relation: 0.22≤X1/A≤0.91. This application further relates to an electric apparatus including the lithium-ion battery.

EP 4 475 261 A1

## Description

### TECHNICAL FIELD

This application relates to a lithium-ion battery having a cell group margin A of 88%-97% and including a non-aqueous electrolyte. The non-aqueous electrolyte includes one or more first organic solvents with a specified structure. Based on a total mass of an organic solvent in the non-aqueous electrolyte, a mass percentage of the first organic solvent is X1, X1 being in a range of 20%-80%, and the cell group margin A and the mass percentage X1 of the first organic solvent satisfy a specified relation: $0.22 \leq X1/A \leq 0.91$, optionally $0.31 \leq X1/A \leq 0.79$. This application further relates to an electric apparatus including the lithium-ion battery.

### BACKGROUND

In recent years, with the development of lithium-ion secondary battery technologies, lithium-ion secondary batteries have been widely used in energy storage power supply systems such as hydroelectric, thermal, wind, and solar power plants, and many other fields including electric tools, electric bicycles, electric motorcycles, electric vehicles, military equipment, and aerospace. Due to the great development of lithium-ion secondary batteries, higher requirements are imposed on their fast charging performance, cycling performance, safety performance, and the like.

With miniaturization and lightweight development of the lithium-ion batteries, high requirements are also imposed on the energy density. Current, in the prior art, to increase the energy density of the lithium-ion batteries, a typical solution used commonly is as follows: An active material on an electrode is compacted as much as possible, allowing the battery to accommodate more electrode active materials on the premise of not changing the space occupied by the volume of the battery. This results in a higher coating weight of an electrode plate and a larger group margin designed. Since the storage space in the lithium-ion battery is small, the lithium-ion battery consequently accommodates less gas generated during cycling and storage, and a cell is extremely likely to swell, causing a great safety hazard.

An objective of the present invention is to provide a lithium-ion battery in which types and amounts of solvents and additives in an electrolyte are adjusted to reduce gas production during cycling and storage of the battery, such that the lithium-ion battery can achieve both high energy density and fast charging performance.

### SUMMARY

This application is implemented in view of the foregoing issue and intended to provide a lithium-ion battery, so as to resolve the technical problem of insufficient fast charging performance and/or excessive volume swelling in batteries under high energy density.

To achieve the foregoing objective, a first aspect of this application provides a lithium-ion battery having a cell group margin A of 88%-97% and including a non-aqueous electrolyte. The non-aqueous electrolyte includes a first organic solvent, and the first organic solvent includes one or more of compounds represented by formula 1,

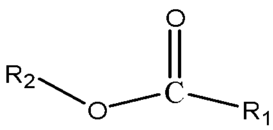

formula 1,

where

$R_1$ and $R_2$ are each independently one of C1-C3 alkyl group and C1-C3 halogenated alkyl group;
based on a total mass of an organic solvent in the non-aqueous electrolyte, a mass percentage of the first organic solvent is X1, X1 being in a range of 20%-80%; and
the cell group margin A and the mass percentage X1 of the first organic solvent satisfy the following relation:

$$0.22 \leq X1/A \leq 0.91$$

In this application, with a high group margin set, the lithium-ion battery can achieve a high energy density. In addition, the electrolyte includes a carboxylic ester solvent with a specified amount, which effectively reduces the viscosity of the electrolyte and increases the conductivity, allowing the lithium-ion battery to have a high energy density and to keep good fast charging performance.

In any embodiment, the cell group margin A and the mass percentage X1 of the first organic solvent satisfy the

following relation: 0.31≤X1/A≤0.79. In any embodiment, the cell group margin A is 90%-95%.

In any embodiment, the mass percentage X1 of the first organic solvent is in a range of 30%-80%, optionally 35%-70%. Selecting the first organic solvent with a specified amount can effectively reduce the resistance of the battery and improve the fast charging performance.

In any embodiment, in formula 1, $R_1$ and $R_2$ are each independently one of methyl group, ethyl group, propyl group, fluoromethyl group, fluoroethyl group, and fluoropropyl group.

In any embodiment, the non-aqueous electrolyte includes a first additive, and the first additive includes at least one sultone additive represented by formula 2:

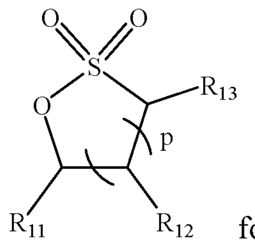

formula 2,

where

p represents 1, 2, or 3, $R_{11}$ represents one of hydrogen atoms, halogen atoms, C1-C6 alkyl group, C1-C3 halogenated alkyl group, C1-C3 alkoxy group, and C1-C3 haloalkoxy group, $R_{12}$ independently represents one of hydrogen atoms, halogen atoms, C1-C3 alkyl group, C1-C3 halogenated alkyl group, C1-C3 alkoxy group, and C1-C3 haloalkoxy group, and $R_{13}$ represents one of hydrogen atoms, halogen atoms, carbonyl group, double bonds, ester group, C1-C3 alkyl group, C1-C3 halogenated alkyl group, C1-C3 alkoxy group, C1-C3 haloalkoxy group, C6-C8 aryl group, or benzyl group;

and/or

the first additive includes at least one cyclic sulfate compound represented by formula 3:

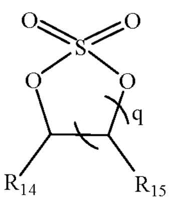

formula 3,

where

q represents 1, 2, or 3, $R_{14}$ represents one of hydrogen atoms, halogen atoms, carbonyl group, double bonds, C1-C6 alkyl group, C1-C3 halogenated alkyl group, C1-C3 alkoxy group, and C1-C3 haloalkoxy group, and $R_{15}$ independently represents one of hydrogen atoms, halogen atoms, C1-C6 alkyl group, C1-C3 halogenated alkyl group, C1-C3 alkoxy group, C1-C3 haloalkoxy group, and C6-C8 aryl group.

In any embodiment, based on the total mass of the non-aqueous electrolyte, a mass percentage of the first additive is W1, and

W1 and the cell group margin A satisfy a relation: 0.0005<W1/A≤0.09, where A is 88%-97%, and 0.05%<W1≤9.7%, optionally 0.1%≤W1≤3%.

In any embodiment, the non-aqueous electrolyte includes a second additive, and the second additive includes one or more of a compound represented by formula 3, a compound represented by formula 4, and/or a compound represented by formula 5;

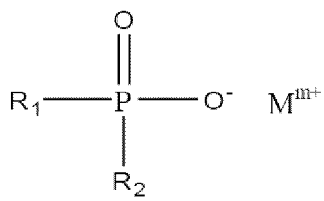

(formula 3),

where $R_1$ and $R_2$ each independently represent F, C1-C6 fluorinated alkyl group, C1-C6 alkyl group, C1-C6 alkoxy group, C2-C6 alkenyl group, C2-C6 alkynyl group, or C6-C10 aryl group, and at least one of $R_1$ and $R_2$ represents F or C1-C6 fluorinated alkyl group; optionally, $R_1$ and $R_2$ each independently represent F, C1-C3 fluorinated alkyl group, C1-C3 alkyl group, C1-C3 alkoxy group, C2-C3 alkenyl group, C2-C3 alkynyl group, phenyl group, benzyl group, or methylphenyl group, and at least one of $R_1$ and $R_2$ represents F or and C1-C3 fluorinated alkyl group; and optionally, $R_1$ and $R_2$ each independently represent F or C1-C3 fluorinated alkyl group;

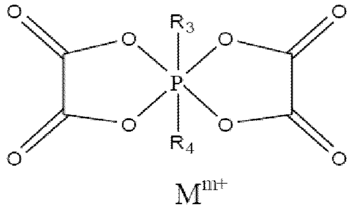

(formula 4),

where $R_3$ and $R_4$ each independently represent F, C1-C6 fluorinated alkyl group, C1-C6 alkyl group, C1-C6 alkoxy group, C2-C6 alkenyl group, or C2-C6 alkynyl group, and at least one of $R_3$ and $R_4$ represents F or C1-C6 fluorinated alkyl group; optionally, $R_3$ and $R_4$ each independently represent F, C1-C3 fluorinated alkyl group, C1-C3 alkyl group, C1-C3 alkoxy group, C2-C3 alkenyl group, or C2-C3 alkynyl group, and at least one of $R_3$ and $R_4$ represents F or and C1-C3 fluorinated alkyl group; and optionally, $R_3$ and $R_4$ each independently represent F or C1-C3 fluorinated alkyl group; and

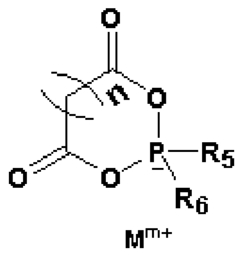

(formula 5),

where $R_5$ and $R_6$ each independently represent F, C1-C6 fluorinated alkyl group, C1-C6 alkyl group, C1-C6 alkoxy group, C2-C6 alkenyl group, C2-C6 alkynyl group, carbonyl group, or O , $BF_3^-$, or boron oxygen bond; optionally, $R_5$ and $R_6$ each independently represent F, C1-C3 fluorinated alkyl group, C1-C3 alkyl group, C1-C3 alkoxy group, C2-C3 alkenyl group, C2-C3 alkynyl group, carbonyl group, or $O^-$, $BF_3^-$; and n=0, 1, or 2 and m=1 or 2; and M represents one or more of alkali metal and alkaline earth metal; and optionally, M is selected from one or more of Li, Na, and K.

In any embodiment, based on the total mass of the non-aqueous electrolyte, a mass percentage of the second additive is W2, and W2 and the cell group margin A satisfy a relation: $0.0005<W2/A\leq 0.09$, where A is 88%-97%, and $0.05\%<W2\leq 9.7\%$, optionally $0.1\%\leq W2\leq 3\%$.

In any embodiment, the non-aqueous electrolyte includes a third additive, and the third additive includes one or more of a compound represented by formula 6 and/or a compound represented by formula 7;

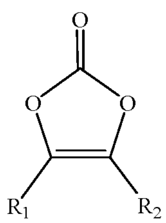

formula 6,

where

$R_1$ and $R_2$ each independently represent hydrogen atoms, halogen atoms, C1-C6 alkyl group, C1-C6 halogenated alkyl group, C1-C6 alkoxy group, C2-C6 alkenyl group, or C2-C6 alkynyl group; and optionally, $R_1$ and $R_2$ each

independently represent hydrogen atoms, halogen atoms, C1-C4 alkyl group, C1-C4 halogenated alkyl group, C1-C4 alkoxy group, C2-C4 alkenyl group, or C2-C4 alkynyl group; and

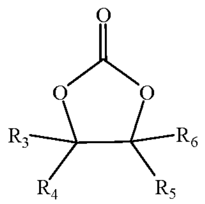

formula 7,

where

$R_3$, $R_4$, $R_5$, and $R_6$ each independently represent hydrogen atoms, halogen atoms, C1-C6 alkyl group, C1-C6 halogenated alkyl group, C1-C6 alkoxy group, C2-C6 alkenyl group, or C2-C6 alkynyl group, and $R_3$, $R_4$, $R_5$, and $R_6$ do not all represent hydrogen atoms; and optionally, $R_3$, $R_4$, $R_5$, and $R_6$ each independently represent hydrogen atoms, halogen atoms, C1-C4 alkyl group, C1-C4 halogenated alkyl group, C1-C4 alkoxy group, C2-C4 alkenyl group, or C2-C4 alkynyl group, and $R_3$, $R_4$, $R_5$, and $R_6$ do not all represent hydrogen atoms.

In any embodiment, based on the total mass of the non-aqueous electrolyte, a mass percentage of the third additive is W3, and

W3 and the cell group margin A satisfy a relation: $0.0005<W3/A\leq 0.09$, where A is 88%-97%, and $0.05\%<W3\leq 9.7\%$, optionally $0.1\%\leq W3\leq 3\%$.

In any embodiment, the mass percentages W1, W2, and W3 of the three additives and the cell group margin A satisfy a relation: $0.0005<(W1+W2+W3)/A\leq 0.1$, where A is 88%-97%, and $0.05\%<(W1+W2+W3)\leq 9.6\%$, optionally $0.1\%\leq (W1+W2+W3)\leq 4\%$.

A second aspect of this application provides an electric apparatus including the lithium-ion battery in the first aspect of this application.

## BRIEF DESCRIPTION OF DRAWINGS

To describe the technical solutions in the embodiments of this application more clearly, the following briefly describes the accompanying drawings required for describing embodiments of this application. Apparently, the accompanying drawings in the following description show only some embodiments of this application, and a person of ordinary skill in the art may still derive other drawings from these accompanying drawings without creative efforts.

FIG. 1 is a schematic diagram of a lithium-ion secondary battery according to an embodiment of this application.

FIG. 2 is an exploded view of the lithium-ion secondary battery according to the embodiment of this application in FIG. 1.

FIG. 3 is a schematic diagram of a battery pack according to an embodiment of this application.

FIG. 4 is an exploded view of the battery pack according to the embodiment of this application in FIG. 3.

FIG. 5 is a schematic diagram of an apparatus using a battery pack as a power supply according to an embodiment of this application.

Reference signs are described as follows:

1. battery pack
2. upper box body
3. lower box body
4. battery module
5. lithium-ion secondary battery
51. housing
52. electrode assembly
53. cover plate

## DETAILED DESCRIPTION OF EMBODIMENTS

For brevity, this application specifically discloses some numerical ranges. However, any lower limit may be combined with any upper limit to form an unspecified range, and any lower limit may be combined with another lower limit to

form an unspecified range, and likewise, any upper limit may be combined with any other upper limit to form an unspecified range. In addition, each individually disclosed point or individual single numerical value may itself be a lower limit or an upper limit which can be combined with any other point or individual numerical value or combined with another lower limit or upper limit to form a range not expressly recorded.

With miniaturization and lightweight development of the lithium-ion batteries, higher requirements are also imposed on the energy density of the lithium-ion battery. For this, a typical solution is to increase a cell group margin, so as to accommodate more active materials, thus increasing the coating weight of an electrode plate. However, as the cell group margin increases, the charge time of the lithium-ion battery is also prolonged, causing a decrease in its fast charging performance. For this, it is necessary to provide a lithium-ion battery, allowing the lithium-ion battery to have both high group margin and improved fast charging performance.

This objective is achieved using a new lithium-ion battery. The lithium-ion battery has a cell group margin A of 88%-97% and includes a non-aqueous electrolyte. The non-aqueous electrolyte includes a first organic solvent, and the first organic solvent includes one or more of compounds represented by formula 1,

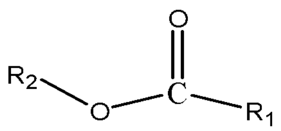 formula 1,

where

$R_1$ and $R_2$ are each independently one of C1-C3 alkyl group and C1-C3 halogenated alkyl group;
based on a total mass of an organic solvent in the non-aqueous electrolyte, a mass percentage of the first organic solvent is X1, X1 being in a range of 20%-80%; and
the cell group margin A and the mass percentage X1 of the first organic solvent satisfy the following relation:

$$0.22 \leq X1/A \leq 0.91.$$

Selecting a proper first organic solvent allows the non-aqueous electrolyte to keep the viscosity in a proper range. Thus, this allows for higher conductivity of the electrolyte, such that the lithium-ion battery including the electrolyte has better fast charging performance.

In some embodiments, the cell group margin A and the mass percentage X1 of the first organic solvent satisfy the following relation: $0.31 \leq X1/A \leq 0.79$. The value of X1/A should be controlled in a proper range, to improve the fast charging performance and maintain the cycling performance of the battery. An excessively small value of X1/A causes an excessively long fast charging time; and an excessively large value of X1/A causes reduction of cycling performance and a significant increase in gas production of the battery. In some embodiments, the cell group margin A is 90%-95%. A cell group margin, unless specifically stated, typically refers to a group margin in a thickness direction of a battery and is characterized by a ratio of an actual internal cross-sectional area to a maximum internal cross-sectional area in a cell, that is, a ratio of a cross-sectional area of various substances in a wound cell to an area covered by the inner diameter of a battery housing after the cell is cut transversely. In this application, the cell group margin A of the lithium-ion battery may be measured in the following method: An internal thickness of a housing of the lithium-ion battery is denoted as L1 for measurement, the thickness of an electrode assembly is denoted as L2 for measurement, and the lithium-ion battery group margin=L2/L1. If the cell group margin A is excessively high, the cell is more difficult to process and more likely to swell, and generates higher pressure on the housing. If the cell group margin A is excessively low, it is difficult to satisfy the requirement for high energy density of the battery.

In some embodiments, the mass percentage X1 of the first organic solvent is in a range of 30%-70%, optionally 35%-65%. The first organic solvent, which is a carboxylic ester or halogenated carboxylic ester solvent, can reduce the viscosity of the non-aqueous electrolyte, thus improving the conductivity of sodium ions in the non-aqueous electrolyte. If the mass percentage X1 of the first organic solvent is excessively low, the effect of improving the conductivity is insufficient and the fast charging time is excessively long. If the mass percentage X1 of the first organic solvent is excessively high, the battery cycling performance decreases and significant swelling is likely to occur.

A proper cell group margin A and a proper mass percentage X1 of the first organic solvent are selected to satisfy the foregoing relation I, which can achieve the best balance between the energy density and the fast charging performance of the lithium-ion battery.

In some embodiments, in formula 1, $R_1$ and $R_2$ are each independently one of methyl group, ethyl group, propyl group, fluoromethyl group, fluoroethyl group, and fluoropropyl group. Further, the first organic solvent includes at least one of the following compounds:

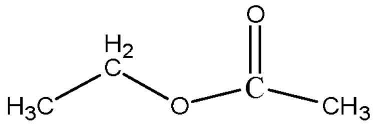 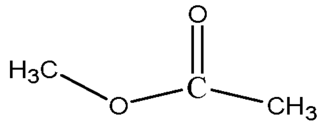

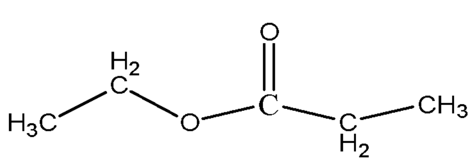 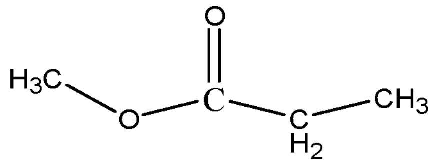

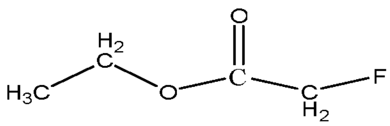 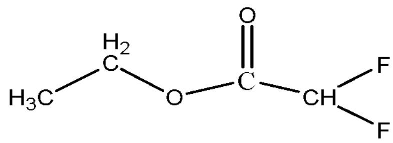

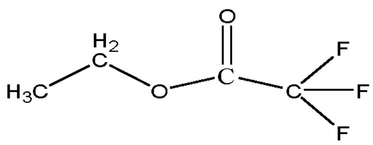 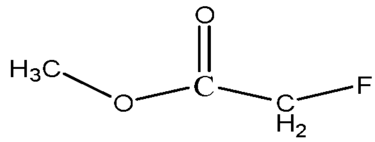

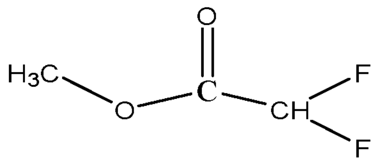 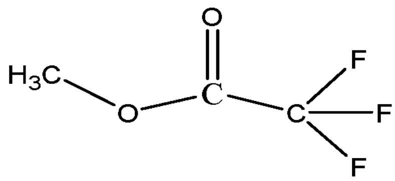

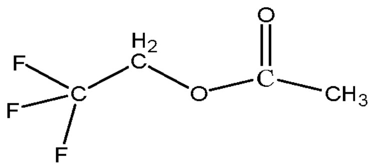 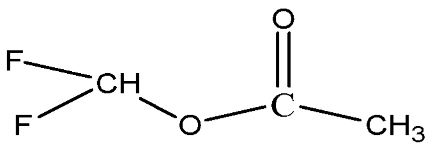;

and optionally, the first organic solvent includes at least one of the following compounds:

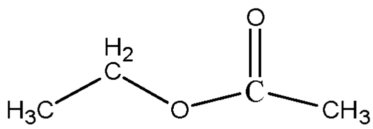 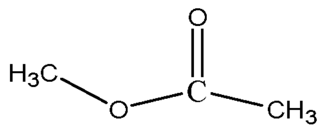

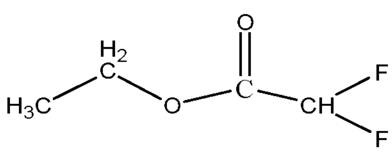 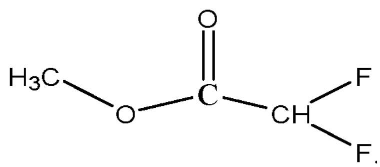.

In some embodiments, the first organic solvent is

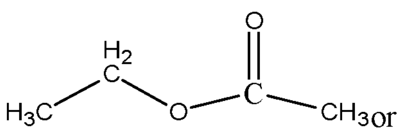 or 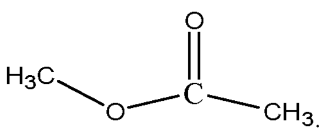.

Although the lithium-ion battery described above in this application has high energy density and improved fast charging performance, in some cases, a large group margin causes a small storage space in the lithium-ion battery. As a result, the lithium-ion battery accommodates less gas generated during cycling and storage. In addition, a highly active first organic solvent results in a large gas production amount, causing a high probability of swelling of the cell and certain safety hazard.

To resolve this technical problem, the inventors introduced an additive capable of inhibiting gas production to ensure a proper range of the gas production amount during cycling and storage of the cell, allowing for a low probability of significant swelling of the battery during operation, thus improving the safety performance of the cell.

In some embodiments, the non-aqueous electrolyte includes a first additive, and the first additive includes at least one sultone additive represented by formula 2:

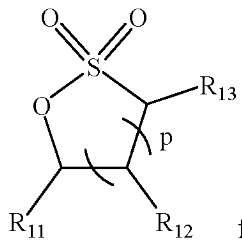
formula 2,

p represents 1, 2, or 3, $R_{11}$ represents hydrogen atoms, halogen atoms, C1-C6 alkyl group, C1-C3 halogenated alkyl group, C1-C3 alkoxy group, and C1-C3 haloalkoxy group, $R_{12}$ independently represents one of hydrogen atoms, halogen atoms, C1-C3 alkyl group, C1-C3 halogenated alkyl group, C1-C3 alkoxy group, and C1-C3 haloalkoxy group, and $R_{13}$ represents one of hydrogen atoms, halogen atoms, carbonyl group, double bonds, ester group, C1-C3 alkyl group, C1-C3 halogenated alkyl group, C1-C3 alkoxy group, C1-C3 haloalkoxy group, C6-C8 aryl group, or benzyl group;

and/or

the first additive includes at least one cyclic sulfate compound represented by formula 3:

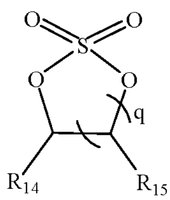
formula 3,

where

q represents 1, 2, or 3, $R_{14}$ represents one of hydrogen atoms, halogen atoms, carbonyl group, double bonds, C1-C6 alkyl group, C1-C3 halogenated alkyl group, C1-C3 alkoxy group, and C1-C3 haloalkoxy group, and $R_{15}$ independently represents one of hydrogen atoms, halogen atoms, C1-C6 alkyl group, C1-C3 halogenated alkyl group, C1-C3 alkoxy group, C1-C3 haloalkoxy group, and C6-C8 aryl group.

For example, the first additive includes at least one of the following compounds:

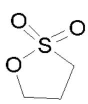 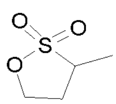 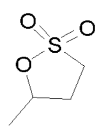 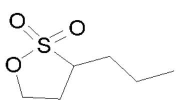 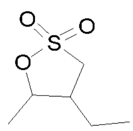

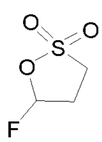 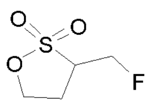 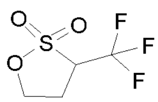 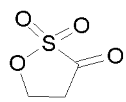 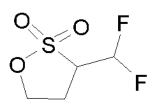

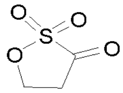 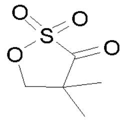 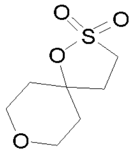 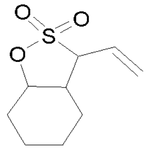 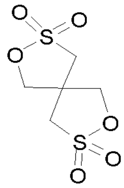

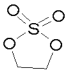 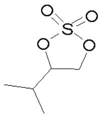 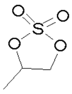 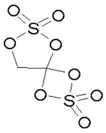 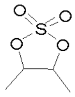 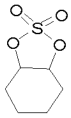

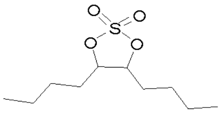 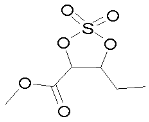 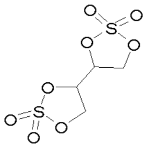 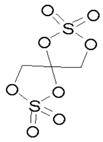 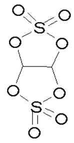

Optionally, the first additive includes at least one of the following compounds:

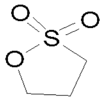 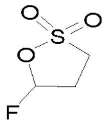 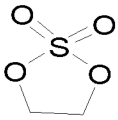 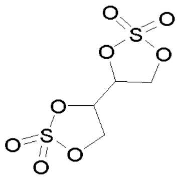

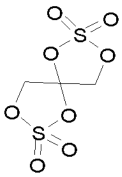 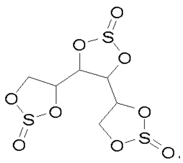.

In some embodiments, based on the total mass of the non-aqueous electrolyte, a mass percentage of the first additive is W1, and

W1 and the cell group margin A satisfy a relation: 0.0005<W1/A≤0.09, where A is 88%-97%, and 0.05%<W1≤9.7%, optionally 0.1%≤W1≤3%. Adjusting the cell group margin A, especially the mass percentage W1 of the first additive is conducive to controlling the value of W1/A in a proper range. An excessively small value of W1/A causes insufficient effect of inhibiting volume swelling of the battery; and an excessively large value of W1/A decreases the battery capacity and affects improvement of the fast charging performance.

In some embodiments, the non-aqueous electrolyte includes a second additive, and the second additive includes one or more of a compound represented by formula 3, a compound represented by formula 4, and/or a compound represented by formula 5;

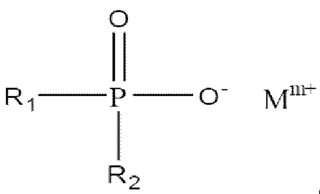

(formula 3),

where $R_1$ and $R_2$ each independently represent F, C1-C6 fluorinated alkyl group, C1-C6 alkyl group, C1-C6 alkoxy group, C2-C6 alkenyl group, C2-C6 alkynyl group, or C6-C10 aryl group, and at least one of $R_1$ and $R_2$ represents F or C1-C6 fluorinated alkyl group; optionally, $R_1$ and $R_2$ each independently represent F, C1-C3 fluorinated alkyl group, C1-C3 alkyl group, C1-C3 alkoxy group, C2-C3 alkenyl group, C2-C3 alkynyl group, phenyl group, benzyl group, or

methylphenyl group, and at least one of $R_1$ and $R_2$ represents F or and C1-C3 fluorinated alkyl group; and optionally, $R_1$ and $R_2$ each independently represent F or C1-C3 fluorinated alkyl group;

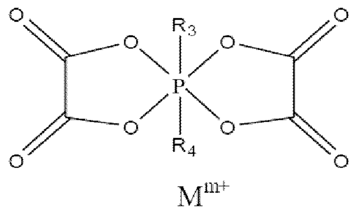

(formula 4),

where $R_3$ and $R_4$ each independently represent F, C1-C6 fluorinated alkyl group, C1-C6 alkyl group, C1-C6 alkoxy group, C2-C6 alkenyl group, or C2-C6 alkynyl group, and at least one of $R_3$ and $R_4$ represents F or C1-C6 fluorinated alkyl group; optionally, $R_3$ and $R_4$ each independently represent F, C1-C3 fluorinated alkyl group, C1-C3 alkyl group, C1-C3 alkoxy group, C2-C3 alkenyl group, or C2-C3 alkynyl group, and at least one of $R_3$ and $R_4$ represents F or and C1-C3 fluorinated alkyl group; and optionally, $R_3$ and $R_4$ each independently represent F or C1-C3 fluorinated alkyl group; and

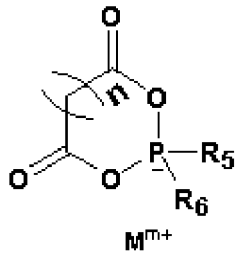

(formula 5),

where $R_5$ and $R_6$ each independently represent F, C1-C6 fluorinated alkyl group, C1-C6 alkyl group, C1-C6 alkoxy group, C2-C6 alkenyl group, C2-C6 alkynyl group, carbonyl group, or O , $BF_3^-$, or boron oxygen bond; optionally, $R_5$ and $R_6$ each independently represent F, C1-C3 fluorinated alkyl group, C1-C3 alkyl group, C1-C3 alkoxy group, C2-C3 alkenyl group, C2-C3 alkynyl group, carbonyl group, or $O^-$, $BF_3^-$; and n=0, 1, or 2 and m=1 or 2; and

M represents one or more of alkali metal and alkaline earth metal; and optionally, M is selected from one or more of Li, Na, and K.

For example, the second additive includes one or more of the following compounds:

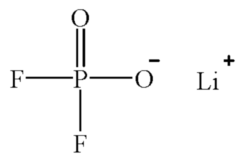 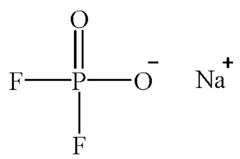 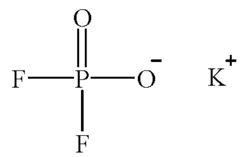

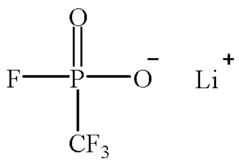 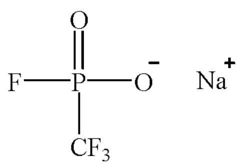 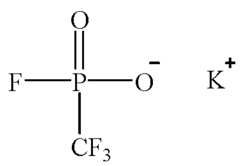

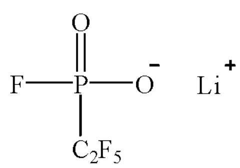 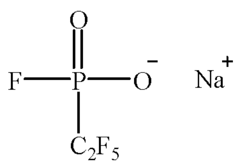 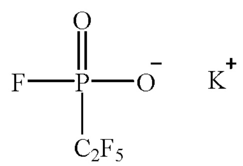

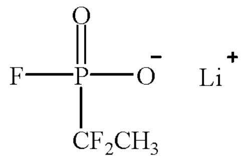
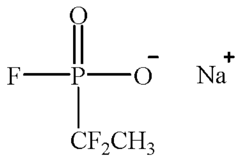
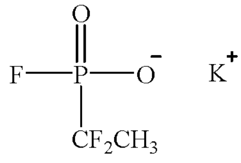

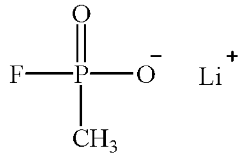
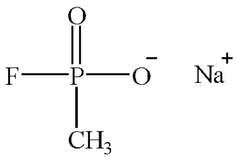
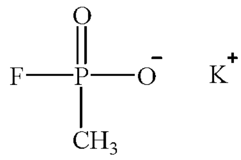

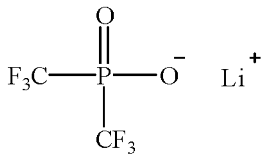
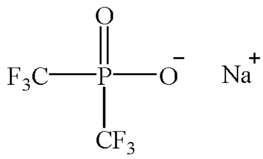
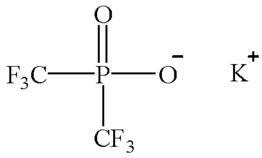

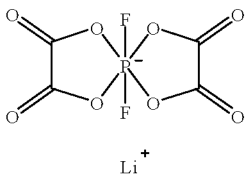
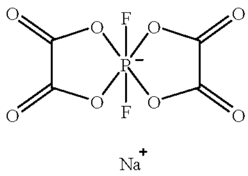
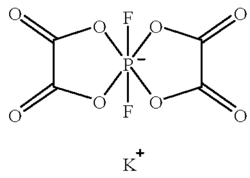

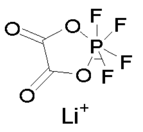
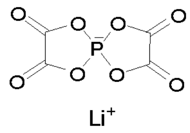
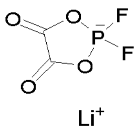
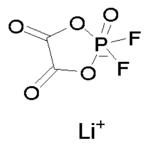

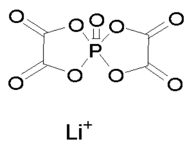
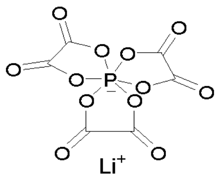
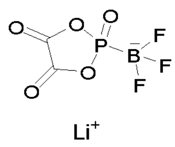
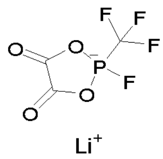

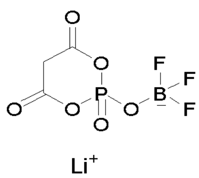
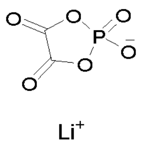
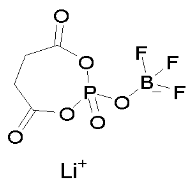

In some embodiments, based on the total mass of the non-aqueous electrolyte, a mass percentage of the second additive is W2, and

W2 and the cell group margin A satisfy a relation: 0.0005<W2/A≤0.09, where A is 88%-97%, and 0.05%<W2≤9.7%, optionally 0.1%≤W2≤3%. Adjusting the cell group margin A, especially the mass percentage W2 of the second additive is conducive to controlling the value of W2/A in a proper range. An excessively small value of W2/A causes insufficient effect of inhibiting volume swelling of the battery; and an excessively large value of W2/A decreases the battery capacity and affects improvement of the fast charging performance.

In some embodiments, the non-aqueous electrolyte includes a third additive, and the third additive includes one or more of a compound represented by formula 6 and/or a compound represented by formula 7;

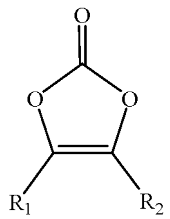

formula 6,

where

$R_1$ and $R_2$ each independently represent hydrogen atoms, halogen atoms, C1-C6 alkyl group, C1-C6 halogenated alkyl group, C1-C6 alkoxy group, C2-C6 alkenyl group, or C2-C6 alkynyl group; and optionally, $R_1$ and $R_2$ each independently represent hydrogen atoms, halogen atoms, C1-C4 alkyl group, C1-C4 halogenated alkyl group, C1-C4 alkoxy group, C2-C4 alkenyl group, or C2-C4 alkynyl group; and

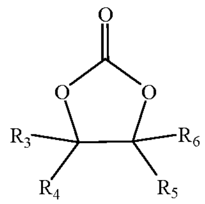

formula 7,

$R_3$, $R_4$, $R_5$, and $R_6$ each independently represent hydrogen atoms, halogen atoms, C1-C6 alkyl group, C1-C6 halogenated alkyl group, C1-C6 alkoxy group, C2-C6 alkenyl group, or C2-C6 alkynyl group, and $R_3$, $R_4$, $R_5$, and $R_6$ do not all represent hydrogen atoms; and optionally, $R_3$, $R_4$, $R_5$, and $R_6$ each independently represent hydrogen atoms, halogen atoms, C1-C4 alkyl group, C1-C4 halogenated alkyl group, C1-C4 alkoxy group, C2-C4 alkenyl group, or C2-C4 alkynyl group, and $R_3$, $R_4$, $R_5$, and $R_6$ do not all represent hydrogen atoms.

For example, the third additive includes one or more of the following compounds:

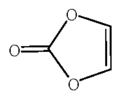
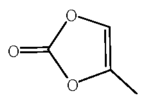
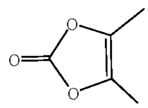
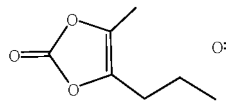
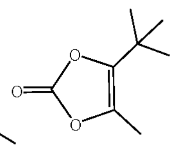

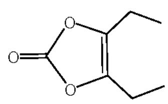
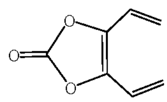
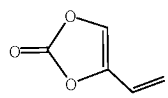
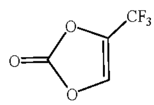
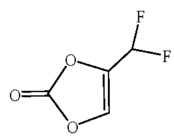

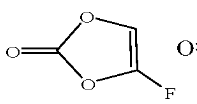
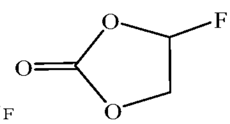
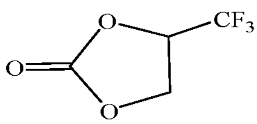

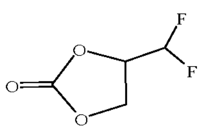
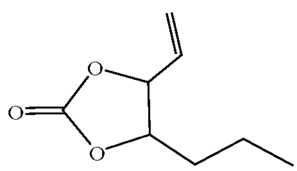

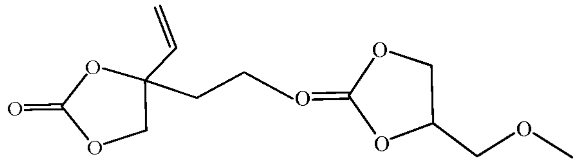
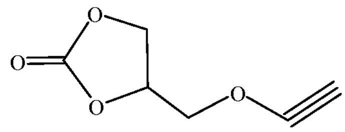

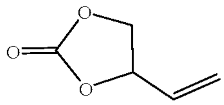
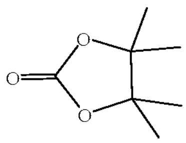
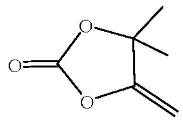

In some embodiments, based on the total mass of the non-aqueous electrolyte, a mass percentage of the third additive is W3, and W3 and the cell group margin A satisfy a relation: $0.0005<W3/A\leq 0.09$, where A is 88%-97%, and $0.05\%<W3\leq 9.7\%$, optionally $0.1\%\leq W3\leq 3\%$. Adjusting the cell group margin A, especially the mass percentage W3 of the third additive is conducive to controlling the value of W3/A in a proper range. An excessively small value of W3/A causes insufficient effect of inhibiting volume swelling of the battery; and an excessively large value of W3/A decreases the battery capacity and affects improvement of the fast charging performance.

In some embodiments, the mass percentages W1, W2, and W3 of the three additives and the cell group margin A satisfy a relation:$0.0005<(W1+W2+W3)/A\leq 0.1$, where A is 88%-97%, and $0.05\%<(W1+W2+W3)\leq 9.6\%$, optionally $0.1\%\leq(W1+W2+W3)\leq 4\%$.

A second aspect of this application provides an electric apparatus including the lithium-ion battery in the first aspect of this application.

The materials of various components of the lithium-ion battery in this application can be chosen from a wide range. In some embodiments, the lithium-ion battery is specifically a lithium-ion secondary battery. A battery cell of the lithium-ion secondary battery is described in detail below.

Generally, a lithium-ion secondary battery includes a positive electrode plate, a negative electrode plate, a separator, and an electrolyte. In a charge and discharge process of the battery, active ions intercalate and deintercalate between the positive electrode plate and the negative electrode plate. The separator is disposed between the positive electrode plate and the negative electrode plate to provide separation. The electrolyte conducts ions between the positive electrode plate and the negative electrode plate.

[Electrolyte]

The electrolyte conducts ions between the positive electrode plate and the negative electrode plate. The electrolyte includes an electrolytic salt and a solvent.

In this application, the electrolytic salt may be an electrolytic salt used commonly in the lithium-ion secondary battery, such as lithium salts, which include a lithium salt that can be used as a highly thermal-stable salt, a lithium salt that can be used as a low-resistance additive, or a lithium salt that inhibits corrosion of an aluminum foil. In an example, the electrolytic salt may be selected from more than one of lithium hexafluorophosphate ($LiPF_6$), lithium tetrafluoroborate ($LiBF_4$), lithium hexafluoroarsenate ($LiAsF_6$), lithium bisfluorosulfonimide (LiFSI), lithium bistrifluoromethanesulfonimide (LiTFSI), lithium trifluoromethanesulfonate (LiTFS), lithium bis(oxalato)borate (LiDFOB), lithium difluorophosphate ($LiPO_2F_2$), lithium difluorodioxalate phosphate (LiDFOP), lithium fluorosulfonyl imide ($LiSO_3F$), difluorodioxophosphate (NDFOP), $Li_2F(SO_2N)_2SO_2F$, KFSI, CsFSI, $Ba(FSI)_2$, and $LiFSO_2NSO_2CH_2CH_2CF_3$.

The solvent is not particularly limited in type, and may be selected based on actual needs. In some embodiments, the solvent is a non-aqueous solvent. Optionally, the solvent may include one or more of linear carbonate, cyclic carbonate, and carboxylate. In some embodiments, the solvent may be selected from more than one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methylmethyl formate (MF), methyl acetate (MA), ethyl acetate (EA), fluoromethyl acetate (FMA), fluoromethyl ethyl acetate (FEA), propyl acetate (PA), methyl propionate (MP), ethyl propionate (EP), propyl propionate (PP), methyl butyrate (MB), ethyl butyrate (EB), 1,4-butyrolactone (GBL), tetrahydrofuran, tetramethylene sulfone (SF), methyl sulfone (MSM), ethyl methyl sulfone (EMS), and diethyl sulfone (ESE).

In some embodiments, the electrolyte further optionally includes other additives. For example, the additive may include a negative electrode film-forming additive, or may include a positive electrode film-forming additive, or may include an additive that can improve some performance of a battery, for example, an additive for improving over-charge performance of the battery, an additive for improving high-temperature performance of the battery, and an additive for

improving low-temperature performance of the battery. In an example, the additive is selected from at least one of cyclic carbonate compound containing unsaturated bonds, cyclic carbonate compound substituted by halogen, sulfate compound, sulfite compound, sultone compound, disulfonic compound, nitrile compound, aromatic compound, isocyanate compound, phosphonitrile compound, cyclic anhydride compound, phosphite ester compound, phosphate ester compound, borate compound, and carboxylic ester compound.

[Positive electrode plate]

The positive electrode plate includes a positive electrode current collector and a positive electrode active substance layer provided on at least one surface of the positive electrode current collector, where the positive electrode active substance layer includes a positive electrode active material and a conductive agent.

In an example, the positive electrode current collector has two opposite surfaces in its thickness direction, and the positive electrode active substance layer is disposed on either or both of the two opposite surfaces of the positive electrode current collector.

In the lithium-ion secondary battery of this application, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (for example, aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

The positive electrode active substance layer provided on the surface of the positive electrode current collector includes a positive electrode active material. The positive electrode active material used in this application may include any conventional positive electrode active material used in a secondary battery. In some embodiments, the positive electrode active material may include one or more of lithium transition metal oxide, olivine-structured lithium-containing phosphate, and respective modified compounds thereof. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of the olivine-structured lithium-containing phosphate may include, but are not limited to, one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and modified compounds thereof. These materials are all commercially available. A surface of the positive electrode active material may be coated with carbon.

The positive electrode active substance layer optionally includes a conductive agent. The conductive agent is not limited to a specific type, and may be selected by persons skilled in the art based on actual needs. For example, the conductive agent used in the positive electrode material may be selected from more than one of superconducting carbon, acetylene black, carbon black, Ketjen black, carbon dots, carbon nanotubes, graphene, and carbon nanofiber.

The positive electrode active substance layer further includes an aqueous binder. The aqueous binder may be selected from one or more of a soluble polysaccharide and its derivative, and a water-soluble or water-dispersible polymer. In an example, the aqueous binder may be methyl cellulose and its salts, xanthan gum and its salts, chitosan and its salts, alginic acid and its salts, polyethyleneimine and its salts, polyacrylamide, acrylic copolymers, and their derivatives.

The positive electrode plate in this application may be prepared by using the method known in the art. For example, a positive electrode active material coated with carbon, the conductive agent, and an aqueous binder are dissolved in a solvent (for example, water) to form a uniform positive electrode slurry; and the positive electrode slurry is applied on a positive electrode current collector, followed by processes such as drying and cold pressing to obtain a positive electrode plate.

[Negative electrode plate]

The negative electrode plate includes a negative electrode current collector and a negative electrode material layer disposed on at least one surface of the negative electrode current collector, and the negative electrode material layer includes a negative electrode active substance.

In an example, the negative electrode current collector has two opposite surfaces in a thickness direction thereof, and the negative electrode material layer is disposed on either or both of the two opposite surfaces of the negative electrode current collector.

In the lithium-ion secondary battery in this application, the negative electrode current collector may be a metal foil or a composite current collector. For example, a copper foil may be used as the metal foil. The composite current collector

may include a polymer material matrix and a metal layer formed on at least one surface of the polymer material matrix. The composite current collector may be formed by forming a metal material (for example, copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In the lithium-ion secondary battery of this application, the negative electrode material layer typically includes a negative electrode active substance, an optional binder, an optional conductive agent, and other optional additives, and is typically formed by applying and drying a negative electrode slurry. The negative electrode slurry is typically obtained by dispersing the negative electrode active substance, the optional conductive agent and binder, and the like in a solvent and stirring them well. The solvent may be N-methylpyrrolidone (NMP) or deionized water.

A specific type of the negative electrode active substance is not limited. An active substance known in the art that can be used as the negative electrode of the lithium-ion secondary battery, and those skilled in the art may select an active substance based on actual needs. In an example, the negative electrode active substance may be selected from one or more of graphite, soft carbon, hard carbon, meso-carbon microbeads, carbon fibers, carbon nanotubes, elemental silicon, silicon oxide, silicon-carbon composite, and lithium titanate.

For example, the conductive agent may be selected from more than one of superconducting carbon, acetylene black, carbon black, Ketjen black, carbon dots, carbon nanotubes, graphene, and carbon nanofiber.

In an example, the binder may be selected from more than one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

The other optional additives may be, for example, a thickener (for example, sodium carboxymethyl cellulose (CMC-Na)).

[Separator]

Lithium-ion secondary batteries using an electrolyte further include a separator. The separator is disposed between the positive electrode plate and the negative electrode plate to provide separation. The separator is not limited to any specific type in this application, and may be any commonly known porous separator with high chemical stability and mechanical stability. In some embodiments, a material of the separator may be selected from more than one of glass fiber, nonwoven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene (PP), polybutylene terephthalate (PBT), and polybutylene succinate (PBS) may be listed.

The secondary battery is not limited to a particular shape in this application, and may be cylindrical, rectangular, or of any other shapes. For example, FIG. 1 shows a lithium-ion secondary battery 5 of a rectangular structure as an example.

In some embodiments, referring to FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. There may be one or more electrode assemblies 52 in the lithium-ion secondary battery 5, and persons skilled in the art may make choices based on actual needs.

The secondary battery in this application may include a battery cell, a battery module, or a battery pack in form. In some embodiments, the battery cells may be assembled into a battery module. In some embodiments, the foregoing battery cells may be assembled into a battery pack. In some embodiments, the foregoing battery modules may be further assembled into a battery pack. In some embodiments, lithium-ion secondary batteries may be assembled into a battery module 4, and the battery module 4 may include one or more lithium-ion secondary batteries. A specific quantity may be chosen by persons skilled in the art based on use and capacity of the battery module 4. In the battery module 4, a plurality of lithium-ion secondary batteries 5 may be sequentially arranged in a length direction of the battery module. Certainly, the

battery cells may alternatively be arranged in any other manners. Further, the plurality of lithium-ion secondary batteries 5 may be fixed by using fasteners. Optionally, the battery module 4 may further include an enclosure with an accommodating space, and the plurality of lithium-ion secondary batteries 5 are accommodated in the accommodating space.

In some embodiments, the lithium-ion secondary batteries 5 or the battery modules 4 may be assembled into a battery pack 1, and the quantity of the lithium-ion secondary batteries 5 or the battery modules 4 included in the battery pack 1 may be chosen by persons skilled in the art based on use and capacity of the battery pack 1.

FIG. 3 and FIG. 4 show a battery pack 1 as an example. Referring to FIG. 3 and FIG. 4, the battery pack 1 may include a battery box and a plurality of battery cells in the battery box. The battery box includes an upper box body 2 and a lower box body 3. The upper box body 2 can cover the lower box body 3 to form an enclosed space for accommodating the battery cells.

In addition, this application further provides an apparatus. The apparatus includes the battery pack provided in this application. The battery pack may be used as a power supply of the apparatus or an energy storage unit of the apparatus. The apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like. A battery pack may be selected for the apparatus according to requirements thereof.

FIG. 5 shows an apparatus as an example. The apparatus is a battery electric vehicle, a hybrid electric vehicle, or a plug-in hybrid electric vehicle, or the like. To meet requirements of the apparatus for high power and high energy density of lithium-ion secondary batteries, a battery pack or a battery module may be used.

Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. If not specifically stated otherwise, all concentration percentages are expressed in weight percentages, and all experiments are conducted at a room temperature (25°C) and normal pressure.

**Example 1**

**(1) Preparation of positive electrode plate**

A positive electrode active material $LiFePO_4$ (LFP), a conductive agent acetylene black, and a binder polyvinylidene fluoride (PVDF) were dissolved at a weight ratio of 90:5:5 in a solvent N-methylpyrrolidone (NMP), and were fully stirred and mixed to produce a positive electrode slurry, and then the positive electrode slurry was evenly applied onto a positive electrode current collector to form a positive electrode plate film of 350 mg/1540.25 $mm^2$ on a single side of a positive electrode plate, followed by drying, cold pressing, and cutting, to obtain a positive electrode plate.

**(2) Preparation of negative electrode plate**

An active substance artificial graphite, a conductive agent carbon black, a binder styrene butadiene rubber (SBR), and a thickener sodium carboxymethyl cellulose (CMC-Na) were dissolved at a weight ratio of 90:4:4:2 in a solvent deionized water, and mixed well to produce a negative electrode slurry. The negative electrode slurry was evenly applied onto a negative electrode current collector copper foil one or more times, followed by drying, cold pressing, and slitting, to obtain a negative electrode plate.

**(3) Preparation of electrolyte**

In an argon atmosphere glove box ($H_2O$<0.1 ppm, and $O_2$<0.1 ppm), organic solvents ethylene carbonate (EC)/methyl ethyl carbonate (EMC) were mixed well at a volume ratio of 3:7. In addition, methyl acetate was added as a first organic solvent. The addition amount of methyl acetate was adjusted to enable its mass percentage in the organic solvents to be 60wt%. Then, a lithium salt of 12.5% $LiPF_6$ was dissolved in the organic solvent and stirred well to obtain an electrolyte.

**(4) Separator**

A conventional polypropylene film was used as a separator.

**(5) Preparation of lithium-ion battery**

The positive electrode plate, separator, and negative electrode plate prepared above were stacked in order, such that the separator was placed between the positive and negative electrodes for separation, and winding was performed to obtain a jelly roll. A packing rate of the active material in the jelly roll was adjusted and its group margin was set to 92%. The jelly roll was welded with a tab and packaged into an aluminum shell, followed by baking for water removal at 80°C, injecting with the electrolyte, and sealing, to obtain a non-charged battery. The non-charged battery was subjected to processes such as standing, hot and cold compressing, formation, shaping, and capacity testing, to obtain the lithium-ion secondary battery product in example 1.

**Examples 2-5**

Steps therein were the same as those in example 1 except that different cell group margins were set for batteries in the examples, as shown in Table 1 below.

**Examples 6 and 7**

Steps therein were the same as those in example 1 except that the types of the first organic solvents were different, as shown in Table 1 below.

**Examples 8-13**

Steps therein were the same as those in example 1 except that the percentages of the first organic solvents were different, as shown in Table 1 below.

**Examples 14-22**

Steps therein were the same as those in example 1 except that first additives of different mass percentages were extra added into the electrolytes in the examples, as shown in Table 1 below.

**Examples 23-31**

Steps therein were the same as those in example 1 except that second additives of different mass percentages were extra added into the electrolytes in the examples, as shown in Table 1 below.

**Examples 32-40**

Steps therein were the same as those in example 1 except that third additives of different mass percentages were extra added into the electrolytes in the examples, as shown in Table 1 below.

**Examples 41-43**

Steps therein were the same as those in example 1 except that the first, second, and third additives of different mass percentages were extra added into the electrolytes in the examples, as shown in Table 1 below.

**Comparative examples 1 and 2**

Steps therein were the same as those in example 1 except that percentages of the first organic solvents were respectively 10% and 90%, as shown in Table 1 below.

**Table 1: Compositions and performance test results of lithium-ion batteries in comparative examples 1 and 2 and examples 1-43**

| | | First solvent | | First additive | | Second additive | | Third additive | | | | | |
|---|---|---|---|---|---|---|---|---|---|---|---|---|---|
| Example No. | Cell group margin (A) | Type | X1 (%) | Type | W1 (%) | Type | W2 (%) | Type | W3 (%) | Battery discharge capacity at 0.5C (Ah) | Fast charging time (minutes) | Cycles after decayed to 80% at 60°C | Volume swelling ratio after 30 days of storage in 100% SOC at 60°C (%) |
| Example 1 | 92% | Methyl acetate | 60 | / | / | / | / | / | / | 153 | 27 | 1255 | 4.8 |
| Example 2 | 88% | Methyl acetate | 60 | / | / | / | / | / | / | 146 | 26.4 | 1311 | 4.1 |
| Example 3 | 90% | Methyl acetate | 60 | / | / | / | / | / | / | 151 | 26.7 | 1281 | 4.5 |
| Example 4 | 94% | Methyl acetate | 60 | / | / | / | / | / | / | 155 | 31.7 | 1141 | 5.6 |
| Example 5 | 97% | Methyl acetate | 60 | / | / | / | / | / | / | 157 | 33.8 | 1101 | 6.1 |
| Example 6 | 92% | Ethyl di-fluor-oa-cetate | 60 | / | / | / | / | / | / | 151 | 32.7 | 1102 | 8.7 |
| Example 7 | 92% | Methyl difluor-oacetate | 60 | / | / | / | / | / | / | 150 | 31.6 | 951 | 5.9 |
| Example 8 | 92% | Methyl acetate | 20 | / | / | / | / | / | / | 157 | 33.1 | 1541 | 3.5 |
| Example 9 | 92% | Methyl acetate | 30 | / | / | / | / | / | / | 156 | 31.7 | 1475 | 3.9 |
| Example 10 | 92% | Methyl acetate | 40 | / | / | / | / | / | / | 155 | 29.2 | 1358 | 4.3 |
| Example 11 | 92% | Methyl acetate | 50 | / | / | / | / | / | / | 154 | 28.3 | 1301 | 4.7 |

(continued)

| | | First solvent | | First additive | | Second additive | | Third additive | | | | | |
|---|---|---|---|---|---|---|---|---|---|---|---|---|---|
| Example No. | Cell group margin (A) | Type | X1 (%) | Type | W1 (%) | Type | W2 (%) | Type | W3 (%) | Battery discharge capacity at 0.5C (Ah) | Fast charging time (minutes) | Cycles after decayed to 80% at 60°C | Volume swelling ratio after 30 days of storage in 100% SOC at 60°C (%) |
| Example 12 | 92% | Methyl acetate | 70 | / | / | / | / | / | / | 151 | 26.1 | 1221 | 5.8 |
| Example 13 | 92% | Methyl acetate | 80 | / | / | / | / | / | / | 148 | 25.2 | 1145 | 6.3 |
| Example 14 | 92% | Methyl acetate | 60 | 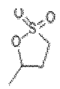 | 2 | / | / | / | / | 154 | 27.8 | 1298 | 4.4 |
| Example 15 | 92% | Methyl acetate | 60 | 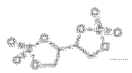 | 2 | / | / | / | / | 155 | 27.3 | 1315 | 4.5 |
| Example 16 | 92% | Methyl acetate | 60 | 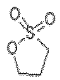 | 2 | / | / | / | / | 157 | 27.1 | 1355 | 4.1 |
| Example 17 | 92% | Methyl acetate | 60 | 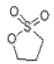 | 0.05 | / | / | / | / | 153 | 27.1 | 1256 | 4.8 |
| Example 18 | 92% | Methyl acetate | 60 | 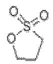 | 0.1 | / | / | / | / | 154 | 27.1 | 1287 | 4.6 |
| Example 19 | 92% | Methyl acetate | 60 | 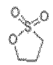 | 0.5 | / | / | / | / | 155 | 27.1 | 1299 | 4.4 |
| Example 20 | 92% | Methyl acetate | 60 | 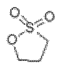 | 5 | / | / | / | / | 157 | 27.8 | 1301 | 4.1 |
| Example 21 | 92% | Methyl acetate | 60 | 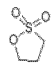 | 8 | / | / | / | / | 156 | 28.3 | 1321 | 3.8 |

(continued)

| | | First solvent | | First additive | | Second additive | | Third additive | | | | | |
|---|---|---|---|---|---|---|---|---|---|---|---|---|---|
| Example No. | Cell group margin (A) | Type | X1 (%) | Type | W1 (%) | Type | W2 (%) | Type | W3 (%) | Battery discharge capacity at 0.5C (Ah) | Fast charging time (minutes) | Cycles after decayed to 80% at 60°C | Volume swelling ratio after 30 days of storage in 100% SOC at 60°C (%) |
| Example 22 | 92% | Methyl acetate | 60 | 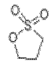 | 15 | / | / | / | / | 155 | 31.7 | 1332 | 3.7 |
| Example 23 | 92% | Methyl acetate | 60 | / | / | 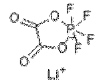 | 2 | / | / | 155 | 27.3 | 1278 | 4.5 |
| Example 24 | 92% | Methyl acetate | 60 | / | / | 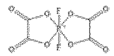 | 2 | / | / | 154 | 27.1 | 1289 | 4.4 |
| Example 25 | 92% | Methyl acetate | 60 | / | / | $LiPO_2F_2$ | 2 | / | / | 156 | 26.9 | 1301 | 4.2 |
| Example 26 | 92% | Methyl acetate | 60 | / | / | $LiPO_2F_2$ | 0.0 5 | / | / | 153 | 27 | 1257 | 4.7 |
| Example 27 | 92% | Methyl acetate | 60 | / | / | $LiPO_2F_2$ | 0.1 | / | / | 154 | 27 | 1267 | 4.6 |
| Example 28 | 92% | Methyl acetate | 60 | / | / | $LiPO_2F_2$ | 0.5 | / | / | 155 | 27 | 1287 | 4.5 |
| Example 29 | 92% | Methyl acetate | 60 | / | / | $LiPO_2F_2$ | 5 | / | / | 154 | 27.3 | 1321 | 4.1 |
| Example 30 | 92% | Methyl acetate | 60 | / | / | $LiPO_2F_2$ | 8 | / | / | 153 | 27.9 | 1334 | 4.0 |
| Example 31 | 92% | Methyl acetate | 60 | / | / | $LiPO_2F_2$ | 15 | / | / | 151 | 28.5 | 1354 | 3.9 |

(continued)

| | | First solvent | | First additive | | Second additive | | Third additive | | | | | |
|---|---|---|---|---|---|---|---|---|---|---|---|---|---|
| Example No. | Cell group margin (A) | Type | X1 (%) | Type | W1 (%) | Type | W2 (%) | Type | W3 (%) | Battery discharge capacity at 0.5C (Ah) | Fast charging time (minutes) | Cycles after decayed to 80% at 60°C | Volume swelling ratio after 30 days of storage in 100% SOC at 60°C (%) |
| Example 32 | 92% | Methyl acetate | 60 | / | / | / | / | 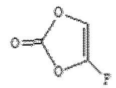 | 2 | 156 | 27.1 | 1321 | 4.6 |
| Example 33 | 92% | Methyl acetate | 60 | / | / | / | / | 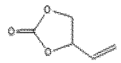 | 2 | 155 | 27.3 | 1255 | 4.3 |
| Example 34 | 92% | Methyl acetate | 60 | / | / | / | / | 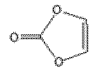 | 2 | 158 | 26.7 | 1275 | 3.9 |
| Example 35 | 92% | Methyl acetate | 60 | / | / | / | / | 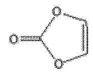 | 0.05 | 153 | 27 | 1254 | 4.8 |
| Example 36 | 92% | Methyl acetate | 60 | / | / | / | / | 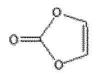 | 0.1 | 154 | 27 | 1258 | 4.7 |
| Example 37 | 92% | Methyl acetate | 60 | / | / | / | / | 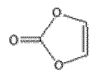 | 0.5 | 155 | 26.8 | 1261 | 4.5 |
| Example 38 | 92% | Methyl acetate | 60 | / | / | / | / | 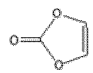 | 5 | 156 | 27.1 | 1278 | 4.0 |
| Example 39 | 92% | Methyl acetate | 60 | / | / | / | / | 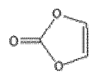 | 8 | 155 | 27.4 | 1254 | 3.8 |
| Example 40 | 92% | Methyl acetate | 60 | / | / | / | / | 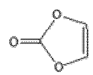 | 15 | 153 | 27.9 | 1232 | 3.7 |

(continued)

| | | First solvent | | First additive | | Second additive | | Third additive | | | | | |
|---|---|---|---|---|---|---|---|---|---|---|---|---|---|
| Example No. | Cell group margin (A) | Type | X1 (%) | Type | W1 (%) | Type | W2 (%) | Type | W3 (%) | Battery discharge capacity at 0.5C (Ah) | Fast charging time (minutes) | Cycles after decayed to 80% at 60°C | Volume swelling ratio after 30 days of storage in 100% SOC at 60°C (%) |
| Example 41 | 92% | Methyl acetate | 60 | 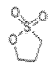 | 1 | $LiPO_2F_2$ | 0.5 | 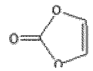 | 0.5 | 158 | 26.8 | 1371 | 3.8 |
| Example 42 | 92% | Methyl acetate | 60 | 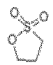 | 0.5 | $LiPO_2F_2$ | 1 | 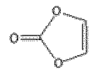 | 0.4 | 157 | 26.9 | 1365 | 3.9 |
| Example 43 | 92% | Methyl acetate | 60 | 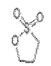 | 0.5 | $LiPO_2F_2$ | 0.5 | 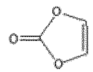 | 1 | 159 | 26.7 | 1385 | 4.1 |
| Comparative example 1 | 92% | Methyl acetate | 10 | / | / | / | / | / | / | | 34 | 1566 | 3.1 |
| Comparative example 2 | 92% | Methyl acetate | 90 | / | / | / | / | / | / | | 24 | 1024 | 9.1 |

**Methods for battery performance tests were described below:**

1. Cell capacity test

At 25°C, the lithium-ion batteries were charged to 4.3 V at a constant current of 0.5C, then charged to a current less than 0.05C at a constant voltage of 4.3 V, and discharged to 2.8 V at a constant current of 0.5C to obtain the discharge capacity at 0.5C.

2. Fast charging time

At 25°C, the batteries were charged to 10% state of charge (SOC) at a current of 0.33C, charged for x minutes to 80% SOC based on specified fast charging steps, and discharged at a current of 1C after left standing for 30 minutes. Then, the batteries were left standing for 30 minutes, undergone 20 cycles, and fully charged. Then, the cells were disassembled to check whether lithium precipitation occurred on the negative electrodes. No lithium precipitation indicated that the cells had x-minute fast charging capability.

1. Cycling performance at 60°C

At 60°C, the lithium-ion batteries were charged to 3.65 V at a constant current of 0.5C, then charged to a current less than 0.05C at a constant voltage of 3.65 V, and discharged to 2.5 V at a constant current of 0.5C. This was one charge and discharge cycle. Charge and discharge were performed in this way repeatedly, and a capacity retention rate of the lithium-ion battery after 1000 cycles was calculated.

2. Volume swelling rate

At 25°C, the prepared lithium-ion secondary batteries were separately charged to 3.65 V at a constant current of 0.33C, further charged to a current of 0.05C at a constant voltage of 3.65 V, and then discharged to 2.5 V at a constant current of 0.33C. The discharge capacity at that point was the discharge capacity of the lithium-ion secondary battery before high-temperature storage. Then, the lithium-ion secondary batteries were charged to 3.65 V at a constant current of 0.33C, charged to a current of 0.05C at a constant voltage of 3.65V, and fully charged. The battery volumes were tested using a drainage method. Then, the lithium-ion secondary batteries were stored for 60 days at 60°C, and then placed in an environment at 25°C at the end of storage. The battery volumes were measured using the drainage method. The battery volume swelling rate=(volume after storage/volume before storage-1)%.

It can be seen from examples 1-13 that the increase of the group margin A and the increase of the mass percentage X1 of the first organic solvent can both effectively reduce the fast charging time, but deteriorate the cycling performance of the battery and increase the volume swelling. Therefore, the ratio of the two is adjusted to allow the value of X1/A to be kept in a proper range, which is conducive to achieving good balance between the fast charging performance and the cycling performance. The selection of the first organic solvent also substantially affects the performance of the battery, which can be seen from comparison between example 1 and examples 6 and 7.

The addition of the first additive can effectively alleviate the volume swelling of the battery, as shown in examples 14-22. However, the addition amount of the first additive needs to be controlled in a proper range because its excessive amount causes a severe deterioration of the fast charging performance. Controlling the value of W1/A in a proper range can achieve good balance between the fast charging time and the volume swelling rate. It is seen from examples 23-40 that the second additive and the third additive cause similar effects as the first additive. In addition, addition of all of the three additives can further alleviate the effect of gas production on the battery volume swelling.

In comparative examples 1 and 2, an excessively large or small amount of the first organic solvent causes excessive battery volume swelling (as shown in comparative example 2) or an excessively long fast charging time (as shown in comparative example 1).

Although this application has been described with reference to the embodiments, various modifications can be made to this application without departing from the scope of this application and the components therein can be replaced with their equivalents. In particular, as long as there is no structural conflict, the various technical features mentioned in the embodiments can be combined in any manner. This application is not limited to the specific embodiments disclosed in this specification but includes all technical solutions falling in the scope of the claims.

**Claims**

**1.** A lithium-ion battery, having a cell group margin A of 88%-97% and comprising a non-aqueous electrolyte, wherein the

non-aqueous electrolyte comprises a first organic solvent, and the first organic solvent comprises one or more of compounds represented by formula 1,

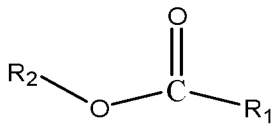

formula 1,

wherein

$R_1$ and $R_2$ are each independently one of C1-C3 alkyl group and C1-C3 halogenated alkyl group;
based on a total mass of an organic solvent in the non-aqueous electrolyte, a mass percentage of the first organic solvent is X1, X1 being in a range of 20%-80%; and
the cell group margin A and the mass percentage X1 of the first organic solvent satisfy the following relation:

$$0.22 \leq X1/A \leq 0.91$$

**2.** The lithium-ion battery according to claim 1, wherein the cell group margin A and the mass percentage X1 of the first organic solvent satisfy the following relation: $0.31 \leq X1/A \leq 0.79$.

**3.** The lithium-ion battery according to claim 1 or 2, wherein the cell group margin A is 90%-95%.

**4.** The lithium-ion battery according to any one of claims 1 to 3, wherein the mass percentage X1 of the first organic solvent is in a range of 30%-70%, optionally 35%-65%.

**5.** The lithium-ion battery according to any one of claims 1 to 4, wherein in formula 1, $R_1$ and $R_2$ are each independently one of methyl group, ethyl group, propyl group, fluoromethyl group, fluoroethyl group, and fluoropropyl group.

**6.** The lithium-ion battery according to any one of claims 1 to 5, wherein the first organic solvent comprises at least one of the following compounds:

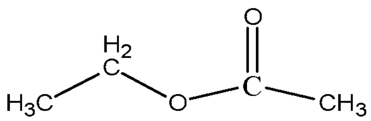
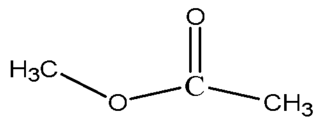

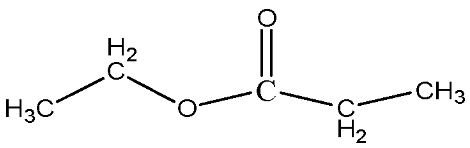
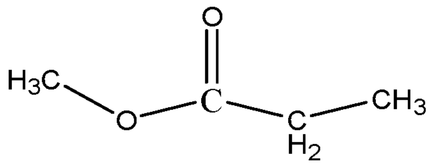

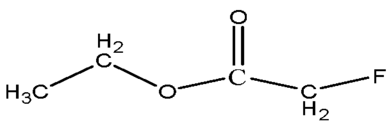
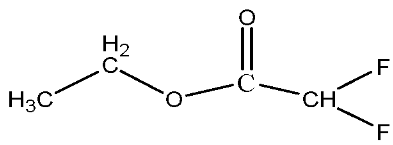

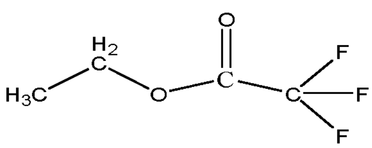
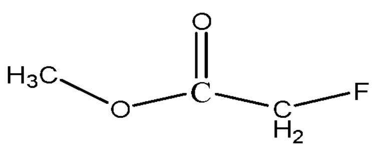

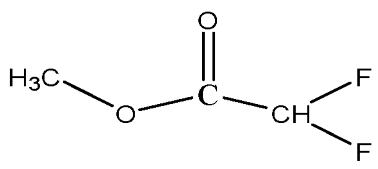

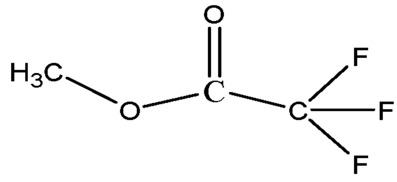

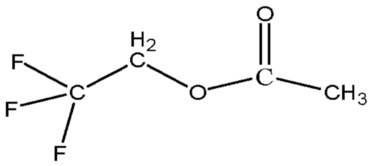

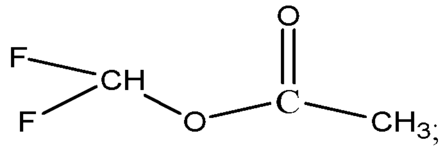

and optionally, the first organic solvent comprises at least one of the following compounds:

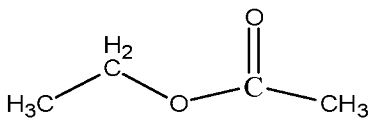

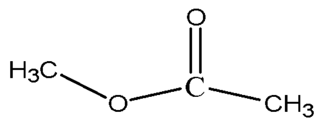

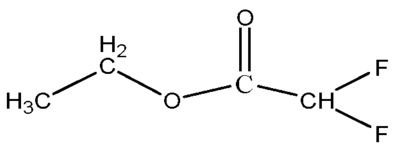

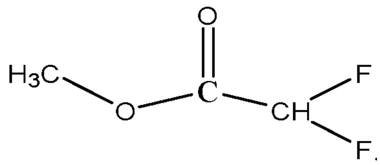

**7.** The lithium-ion battery according to any one of claims 1 to 6, wherein the non-aqueous electrolyte comprises a first additive, and the first additive comprises at least one sultone additive represented by formula 2:

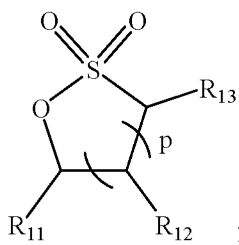

formula 2,

wherein

p represents 1, 2, or 3, $R_{11}$ represents one of hydrogen atoms, halogen atoms, C1-C6 alkyl group, C1-C3 halogenated alkyl group, C1-C3 alkoxy group, and C1-C3 haloalkoxy group, $R_{12}$ independently represents one of hydrogen atoms, halogen atoms, C1-C3 alkyl group, C1-C3 halogenated alkyl group, C1-C3 alkoxy group, and C1-C3 haloalkoxy group, and $R_{13}$ represents one of hydrogen atoms, halogen atoms, carbonyl group, double bonds, ester group, C1-C3 alkyl group, C1-C3 halogenated alkyl group, C1-C3 alkoxy group, C1-C3 haloalkoxy group, C6-C8 aryl group, or benzyl group;
and/or
the first additive comprises at least one cyclic sulfate compound represented by formula 3:

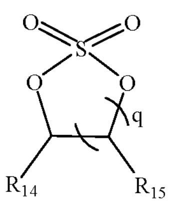

formula 3,

wherein

q represents 1, 2, or 3, $R_{14}$ represents one of hydrogen atoms, halogen atoms, carbonyl group, double bonds, C1-C6 alkyl group, C1-C3 halogenated alkyl group, C1-C3 alkoxy group, and C1-C3 haloalkoxy group, and $R_{15}$ independently represents one of hydrogen atoms, halogen atoms, C1-C6 alkyl group, C1-C3 halogenated alkyl group, C1-C3 alkoxy group, C1-C3 haloalkoxy group, and C6-C8 aryl group.

**8.** The lithium-ion battery according to claim 7, wherein the first additive comprises at least one of the following compounds:

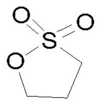 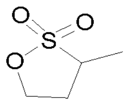 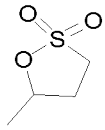 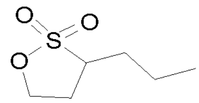 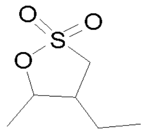

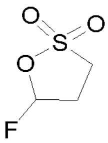 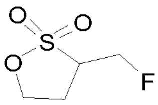 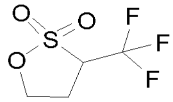 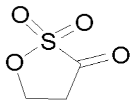 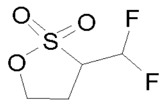

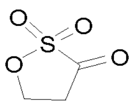 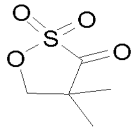 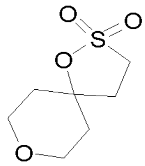 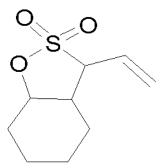 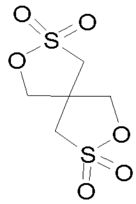

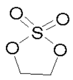 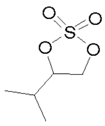 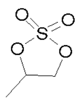 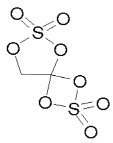 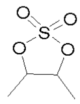 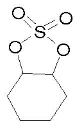

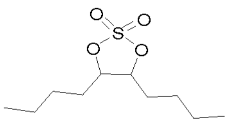 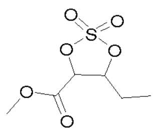 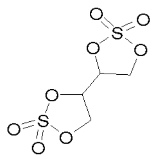 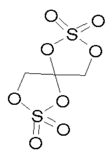 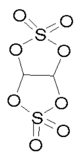 ;

and

optionally, the first additive comprises at least one of the following compounds:

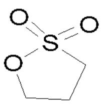 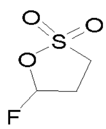 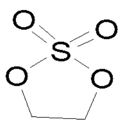 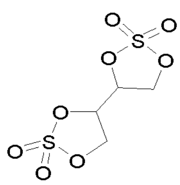

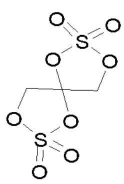 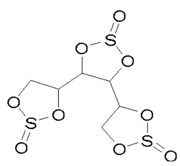

**9.** The lithium-ion battery according to claim 7 or 8, wherein based on the total mass of the non-aqueous electrolyte, a mass percentage of the first additive is W1, and
W1 and the cell group margin A satisfy a relation: $0.0005<W1/A\leq0.09$, wherein A is 88%-97%, and $0.05\%<W1\leq9.7\%$, optionally $0.1\%\leq W1\leq3\%$.

**10.** The aqueous positive electrode plate compound according to any one of claims 1 to 9, wherein the non-aqueous electrolyte comprises a second additive, and the second additive comprises one or more of a compound represented by formula 3, a compound represented by formula 4, and/or a compound represented by formula 5;

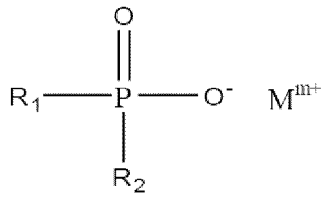
(formula 3),

wherein $R_1$ and $R_2$ each independently represent F, C1-C6 fluorinated alkyl group, C1-C6 alkyl group, C1-C6 alkoxy group, C2-C6 alkenyl group, C2-C6 alkynyl group, or C6-C10 aryl group, and at least one of $R_1$ and $R_2$ represents F or C1-C6 fluorinated alkyl group; optionally, $R_1$ and $R_2$ each independently represent F, C1-C3 fluorinated alkyl group, C1-C3 alkyl group, C1-C3 alkoxy group, C2-C3 alkenyl group, C2-C3 alkynyl group, phenyl group, benzyl group, or methylphenyl group, and at least one of $R_1$ and $R_2$ represents F or and C1-C3 fluorinated alkyl group; and optionally, $R_1$ and $R_2$ each independently represent F or C1-C3 fluorinated alkyl group;

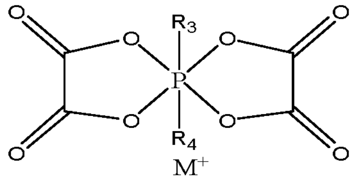
(formula 4),

wherein $R_3$ and $R_4$ each independently represent F, C1-C6 fluorinated alkyl group, C1-C6 alkyl group, C1-C6 alkoxy group, C2-C6 alkenyl group, or C2-C6 alkynyl group, and at least one of $R_3$ and $R_4$ represents F or C1-C6 fluorinated alkyl group; optionally, $R_3$ and $R_4$ each independently represent F, C1-C3 fluorinated alkyl group, C1-C3 alkyl group, C1-C3 alkoxy group, C2-C3 alkenyl group, or C2-C3 alkynyl group, and at least one of $R_3$ and $R_4$ represents F or and C1-C3 fluorinated alkyl group; and optionally, $R_3$ and $R_4$ each independently represent F or C1-C3 fluorinated alkyl group; and

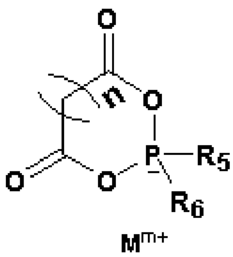
(formula 5),

wherein $R_5$ and $R_6$ each independently represent F, C1-C6 fluorinated alkyl group, C1-C6 alkyl group, C1-C6 alkoxy group, C2-C6 alkenyl group, C2-C6 alkynyl group, carbonyl group, or $O^-$, $BF_3^-$, or boron oxygen bond; optionally, $R_5$ and $R_6$ each independently represent F, C1-C3 fluorinated alkyl group, C1-C3 alkyl group, C1-C3 alkoxy group, C2-C3 alkenyl group, C2-C3 alkynyl group, carbonyl group, or $O^-$, $BF_3^-$; and n=0, 1, or 2 and m=1 or 2; and
M represents one or more of alkali metal and alkaline earth metal; and optionally, M is selected from one or more of Li, Na, and K.

**11.** The lithium-ion battery according to claim 10, wherein the second additive comprises one or more of the following

compounds:

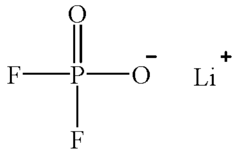 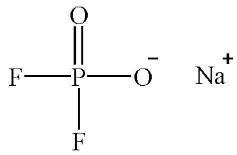 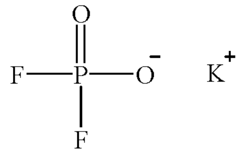

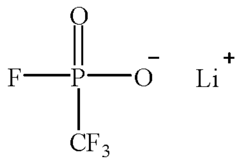 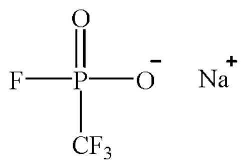 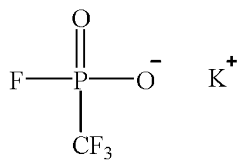

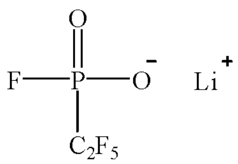 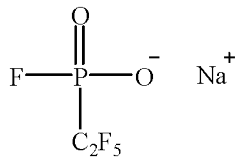 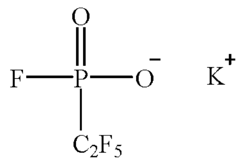

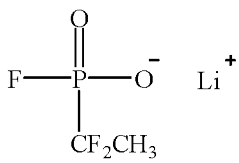 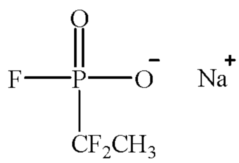 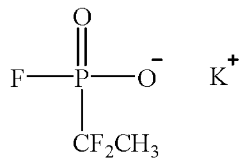

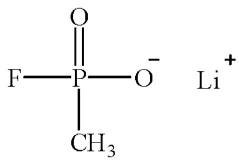 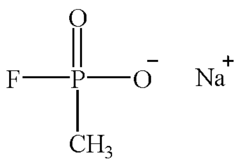 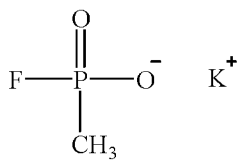

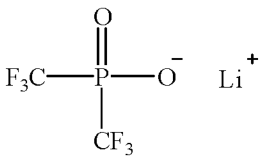 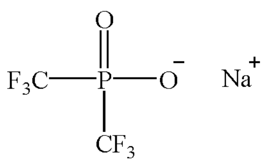 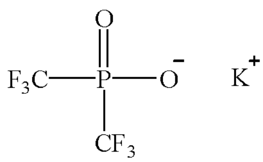

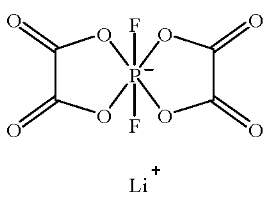 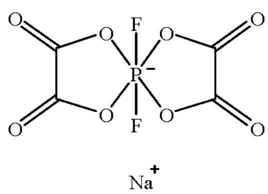 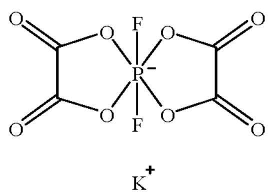

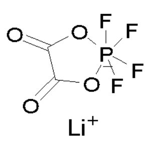 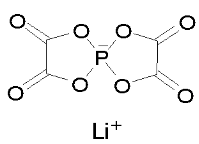 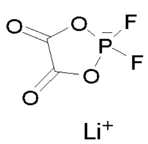 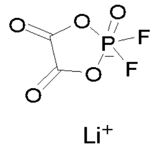

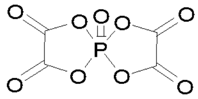

Li$^+$

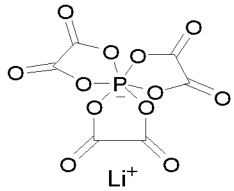

Li$^+$

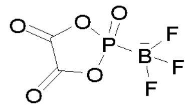

Li$^+$

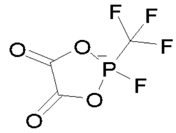

Li$^+$

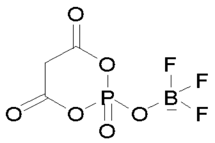

Li$^+$

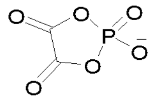

Li$^+$

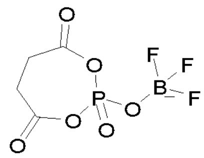

Li$^+$

12. The lithium-ion battery according to claim 10 or 11, wherein based on the total mass of the non-aqueous electrolyte, a mass percentage of the second additive is W2, and
W2 and the cell group margin A satisfy a relation: 0.0005<W2/A≤0.09, wherein A is 88%-97%, and 0.05%<W2≤9.7%, optionally 0.1%≤W2≤3%.

13. The lithium-ion battery according to any one of claims 1 to 12, wherein the non-aqueous electrolyte comprises a third additive, and the third additive comprises one or more of a compound represented by formula 6 and/or a compound represented by formula 7;

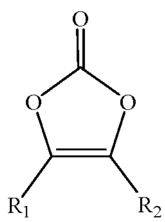

formula 6,

wherein

$R_1$ and $R_2$ each independently represent hydrogen atoms, halogen atoms, C1-C6 alkyl group, C1-C6 halogenated alkyl group, C1-C6 alkoxy group, C2-C6 alkenyl group, or C2-C6 alkynyl group; and optionally, $R_1$ and $R_2$ each independently represent hydrogen atoms, halogen atoms, C1-C4 alkyl group, C1-C4 halogenated alkyl group, C1-C4 alkoxy group, C2-C4 alkenyl group, or C2-C4 alkynyl group; and

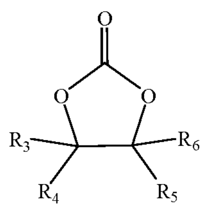

formula 7,

wherein
$R_3$, $R_4$, $R_5$, and $R_6$ each independently represent hydrogen atoms, halogen atoms, C1-C6 alkyl group, C1-C6 halogenated alkyl group, C1-C6 alkoxy group, C2-C6 alkenyl group, or C2-C6 alkynyl group, and $R_3$, $R_4$, $R_5$, and $R_6$ do not all represent hydrogen atoms; and optionally, $R_3$, $R_4$, $R_5$, and $R_6$ each independently represent hydrogen atoms, halogen atoms, C1-C4 alkyl group, C1-C4 halogenated alkyl group, C1-C4 alkoxy group, C2-C4 alkenyl group, or C2-C4 alkynyl group, and $R_3$, $R_4$, $R_5$, and $R_6$ do not all represent hydrogen atoms.

14. The lithium-ion battery according to claim 13, wherein the third additive comprises one or more of the following compounds:

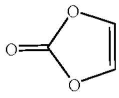 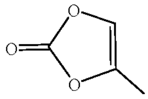 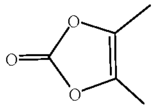 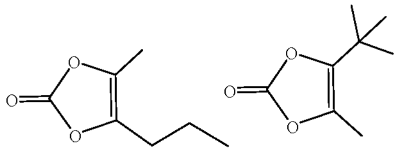

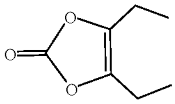 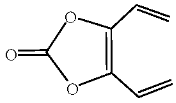 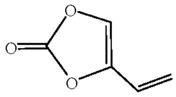 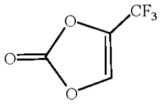 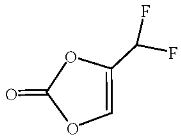

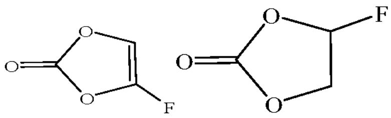 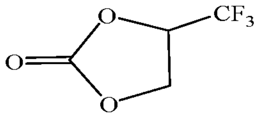

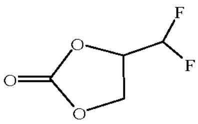 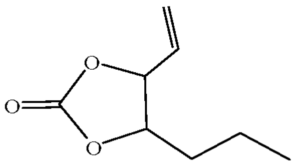

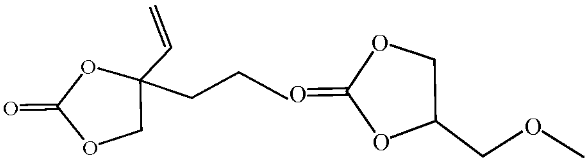 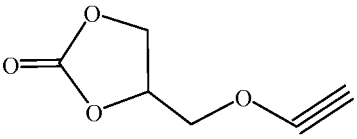

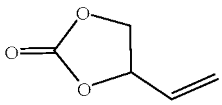 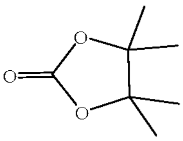 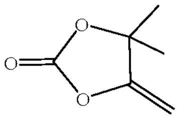.

**15.** The lithium-ion battery according to claim 13 or 14, wherein based on the total mass of the non-aqueous electrolyte, a mass percentage of the third additive is W3, and
W3 and the cell group margin A satisfy a relation: 0.0005<W3/A≤0.09, wherein A is 88%-97%, and 0.05%<W3≤9.7%, optionally 0.1%≤W3≤3%.

**16.** The lithium-ion battery according to any one of claims 1 to 15, wherein the mass percentages W1, W2, and W3 of the three additives and the cell group margin A satisfy a relation: 0.0005<(W1+W2+W3)/A≤0.1, wherein A is 88%-97%, and 0.05%<(W1+W2+W3)≤9.6%, optionally 0.1%≤(W1+W2+W3)≤4%.

**17.** An electric apparatus, comprising the lithium-ion battery according to any one of claims 1 to 16.

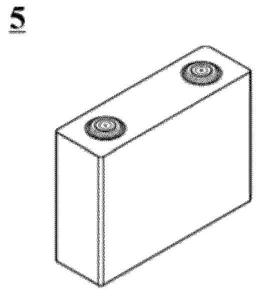


FIG. 1

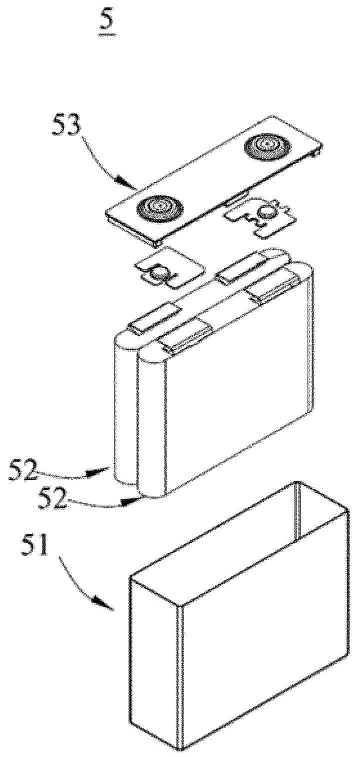


FIG. 2

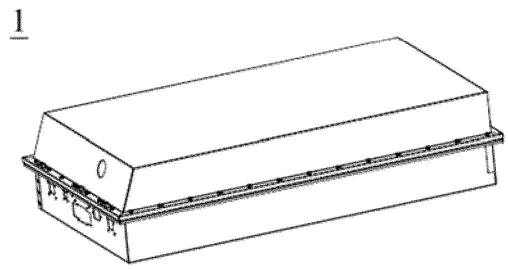


FIG. 3

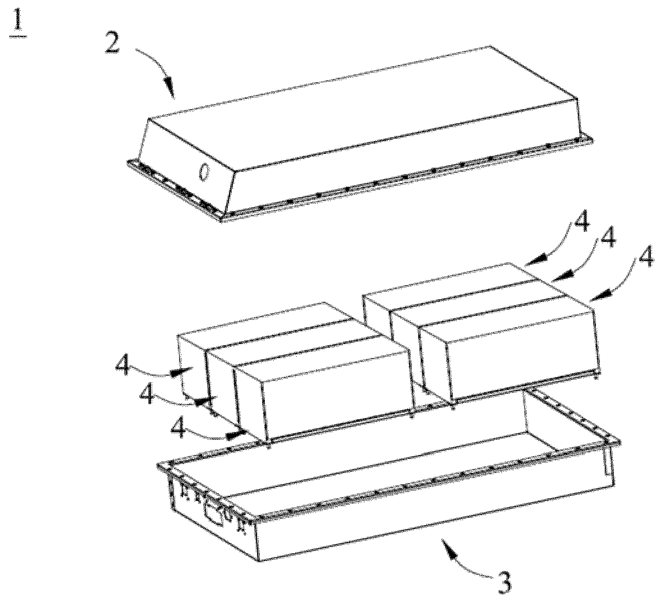


FIG. 4

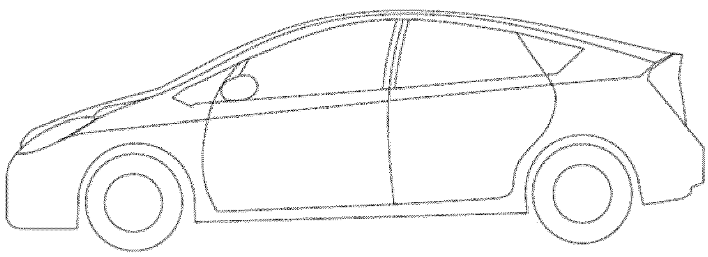

FIG. 5

**INTERNATIONAL SEARCH REPORT**

International application No. **PCT/CN2023/071870**

**A. CLASSIFICATION OF SUBJECT MATTER**

H01M 10/0569(2010.01)i; H01M 10/0567(2010.01)i; H01M 10/0525(2010.01)i

According to International Patent Classification (IPC) or to both national classification and IPC

**B. FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 电池, 电芯, 群裕度, 膨胀, 溶剂, 羧酸酯, 添加剂, 磺酸内酯, 硫酸酯, 磷酸酯, battery, cell, group margin, expan+, solvent, carboxylic acid ester, additive, sultone, sulfate ester, phosphate ester

**C. DOCUMENTS CONSIDERED TO BE RELEVANT**

| Category* | Citation of document, with indication, where appropriate, of the relevant passages | Relevant to claim No. |
|---|---|---|
| Y | CN 114520371 A (XIANGHE KUNLUN NEW ENERGY MATERIALS CO., LTD.) 20 May 2022 (2022-05-20)<br>description, paragraphs 8-119, and figures 1-5 | 1-17 |
| Y | CN 112349962 A (CONTEMPORARY AMPEREX TECHNOLOGY CO., LTD.) 09 February 2021 (2021-02-09)<br>description, paragraphs 11-24 | 1-17 |
| A | CN 110970664 A (CONTEMPORARY AMPEREX TECHNOLOGY CO., LTD.) 07 April 2020 (2020-04-07)<br>description, paragraphs 5-55 | 1-17 |
| A | CN 112349960 A (CONTEMPORARY AMPEREX TECHNOLOGY CO., LTD.) 09 February 2021 (2021-02-09)<br>description, paragraphs 6-35 | 1-17 |

☐ Further documents are listed in the continuation of Box C.  ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **22 August 2023** | **22 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | <br>Telephone No. |

Form PCT/ISA/210 (second sheet) (July 2022)

**INTERNATIONAL SEARCH REPORT**
**Information on patent family members**

International application No.
**PCT/CN2023/071870**

| Patent document cited in search report | | | Publication date (day/month/year) | Patent family member(s) | | | Publication date (day/month/year) |
|---|---|---|---|---|---|---|---|
| CN | 114520371 | A | 20 May 2022 | None | | | |
| CN | 112349962 | A | 09 February 2021 | CN | 112349962 | B | 09 November 2021 |
| CN | 110970664 | A | 07 April 2020 | US | 2021202997 | A1 | 01 July 2021 |
| | | | | WO | 2020063885 | A1 | 02 April 2020 |
| | | | | EP | 3832773 | A1 | 09 June 2021 |
| | | | | EP | 3832773 | A4 | 01 December 2021 |
| | | | | EP | 3832773 | B1 | 21 June 2023 |
| CN | 112349960 | A | 09 February 2021 | None | | | |

Form PCT/ISA/210 (patent family annex) (July 2022)